# EUROPEAN PATENT SPECIFICATION

(11) **EP 4 122 689 B1**
(45) Date of publication and mention of the grant of the patent: **29.04.2026**
(21) Application number: 21306021.3
(22) Date of filing: 20.07.2021
(51) Int. Cl.: B29D 11/00, B29C 33/38, B29C 33/42, B29C 45/00, B29C 45/37, B29C 45/73

(54) **LOW THERMAL CONDUCTIVITY METAL INSERT WITH SURFACE MICROSTRUCTURES**
METALLEINSATZ MIT GERINGER WÄRMELEITFÄHIGKEIT MIT OBERFLÄCHENMIKROSTRUKTUREN
INSERT DE MÉTAL À FAIBLE CONDUCTIVITÉ THERMIQUE AVEC DES MICROSTRUCTURES DE SURFACE

(43) Date of publication of application: 25.01.2023
(73) Proprietor: ESSILOR INTERNATIONAL, 94220 Charenton-Le-Pont (FR)
(72) Inventor: CHIU, Hao-Wen, HOLDEN, 01520 (US)
(74) Representative: Plasseraud IP

(56) References cited:
- EP-A1- 3 730 269
- JP-A- H1 148 258
- US-A1- 2005 242 454

## Description

### FIELD

The present disclosure relates to a low thermal conductivity mold insert for reducing defects during fabrication of lenses having microstructures thereon.

### BACKGROUND

The background description provided herein is for the purpose of generally presenting the context of the disclosure. Work of the presently named inventors, to the extent the work is described in this background section, as well as aspects of the description that may not otherwise qualify as prior art at the time of filing, are neither expressly nor impliedly admitted as prior art against the present disclosure.

Glass inserts can be used during injection molding to fabricate lenses that are free of defects, such as "weld line" and "center distortion" defects. Glass inserts are more adept at preventing such defects due to having lower thermal conductivity. This property helps preserve the heat of an injected polymer melt, which then helps "heal" weld line defects by prolonging the cooling of the polymer melt and preventing distortion due to uneven shrinkage.

However, injection molding of lenses can require glass inserts having microlenses on their surface that are difficult to produce on typical glass materials such as borosilicate. That is, forming microstructures on a glass surface can be expensive, difficult to produce, can lead to glass breakage during microstructure engraving, and are easily and often broken during handling, cleaning, and the production of lenses. Moreover, glass inserts break easily during injection molding, which leads significant equipment down time and thus reduces yields and productivity.

Therefore, a mold insert that has similar thermal behavior (i.e. low thermal conductivity) to glass while providing a suitable functional surface to withstand the microstructure fabrication process on said surface is desired. The desired mold insert will also be durable and resist breakage during molding processes.

A mold insert for fabricating a microstructured lens comprising a functional surface made of a nickel alloy and a bulk portion made of stainless steel is known from document EP 3 730 269 A1.

Aspects of the disclosure may address some of the above-described shortcomings in the art, particularly with the solutions set forth in the claims.

### SUMMARY

The present disclosure relates to a mold insert according to claim 1.

The present disclosure additionally relates to a method of forming a mold insert according to claim 7.

Note that this summary section does not specify every feature and/or incrementally novel aspect of the present disclosure or claimed invention. Instead, this summary only provides a preliminary discussion of different embodiments and corresponding points of novelty. For additional details and/or possible perspectives of the embodiments, the reader is directed to the Detailed Description section and corresponding figures of the present disclosure as further discussed below.

### BRIEF DESCRIPTION OF THE DRAWINGS

Various embodiments of this disclosure that are proposed as examples will be described in detail with reference to the following figures, wherein:
FIG. 1 shows an exemplary cross-sectional schematic of an exemplary prescription lens, within the scope of the present disclosure.
FIG. 2 shows a series of optical images of a polymer melt injected into the cavity of the mold device for an injection process, within the scope of the present disclosure.
FIG. 3 shows optical images of weld line defect conditions, within the scope of the present disclosure.
FIG. 4 shows an optical image of a center distortion, within the scope of the present disclosure.
FIG. 5 shows a graphic illustration of a concave NiP plated stainless steel (NiP-SS) insert with concave microlenses on the surface formed by a diamond turning process, within the scope of the present disclosure.
FIG. 6A shows a cross-sectional schematic of a first mold insert, useful within the scope of the present disclosure.
FIG. 6B shows an exemplary schematic of a straight injection molding process, useful within the scope of the present disclosure.
FIG. 7 shows a summary of metal alloys for making NiP plated first mold inserts with the plurality of microstructure formed therein, useful within the scope of the present disclosure.
FIG. 8 is an exemplary flow chart for a method of forming a lens, useful within the scope of the present disclosure.

### DETAILED DESCRIPTION

The following disclosure provides many different variations, or examples, for implementing different features of the provided subject matter. Specific examples of components and arrangements are described below to simplify the present disclosure. These are, of course, merely examples and are not intended to be limiting nor inoperable together in any permutation. Unless indicated otherwise, the features and embodiments described herein are operable together in any permutation. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "top," "bottom," "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. Inventive apparatuses may be otherwise oriented (rotated 90 degrees or at other orientations) and the spatially relative descriptors used herein may likewise be interpreted accordingly.

The order of discussion of the different steps as described herein has been presented for clarity sake. In general, these steps can be performed in any suitable order. Additionally, although each of the different features, techniques, configurations, etc. herein may be discussed in different places of this disclosure, it is intended that each of the concepts can be executed independently of each other or in combination with each other. Accordingly, the present disclosure can be embodied and viewed in many different ways.

As previously mentioned, weld line and center distortion defects can occur during the molding process for lenses due to the increased cooling of an injected polymer melt. In general, weld lines can be formed during injection when an advancing polymer melt front meets another melt front, which can originate from filling a cavity of the mold from multiple gates. As such, this can lead to head-on impingement of separate flow fronts of the polymer melt, or splitting and converging of flow fronts due to presence of obstacles or excess transversal part thickness variation.

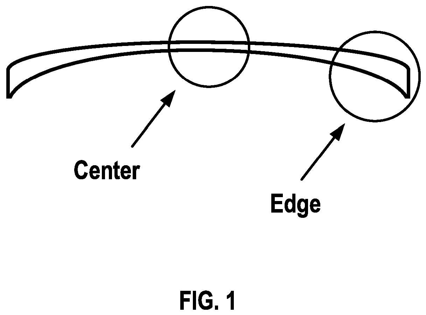

FIG. 1 shows an exemplary cross-sectional schematic of an exemplary prescription lens, useful within the scope of the present disclosure. For the injection molding of the prescription lens with negative powers, weld line formation can occur because the geometry of the desired lens is thin at the center and progressively thicker toward an edge of the lens. For example, the lens in FIG. 1 can illustrate a -2.75D lens having a thinner center and thicker edges. Injection molding of such a lens of high aspect ratio presents two potential issues. First, the flow resistance around the thin center can be much higher than that around the thick edge. As a result, the polymer melt front tends to split near a gate or opening into the mold through which the polymer melt is injected, wrap around the center, and eventually meet at an opposite end to the gate forming a weld line that is considered a cosmetic defect. Second, the thin center cools faster and solidifies much earlier than the rest of the lens leading to uneven shrinkage. Typically, for injection molding, part shrinkage is compensated through packing in more melt material during cooling. However, the high flow resistance around the thin center of a minus lens prevents effective packing from occurring. As a result, the uneven shrinkage remains and a small bulge forms, which lead to high distortion at the center of the lens

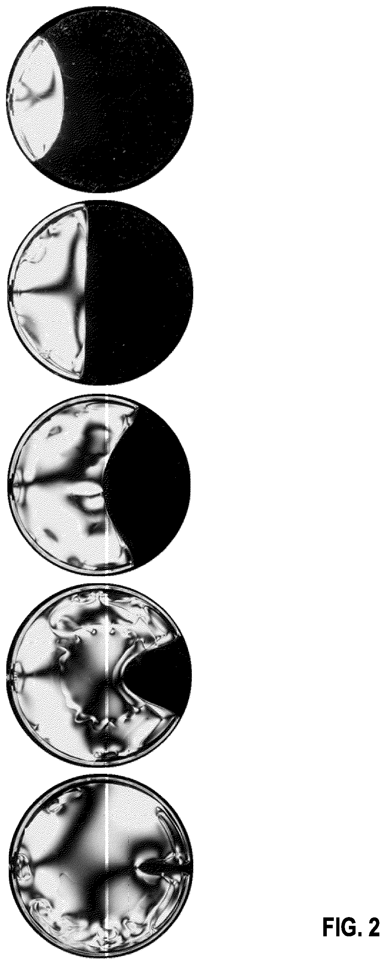

To this end, FIG. 2 shows a series of optical images of a polymer melt injected into the cavity of the mold device for an injection process, useful within the scope of the present disclosure. The advancement of the melt front during cavity filling of a minus lens leads to the formation of a weld line. As shown in the last optical image of the series, a weld line defect is present.

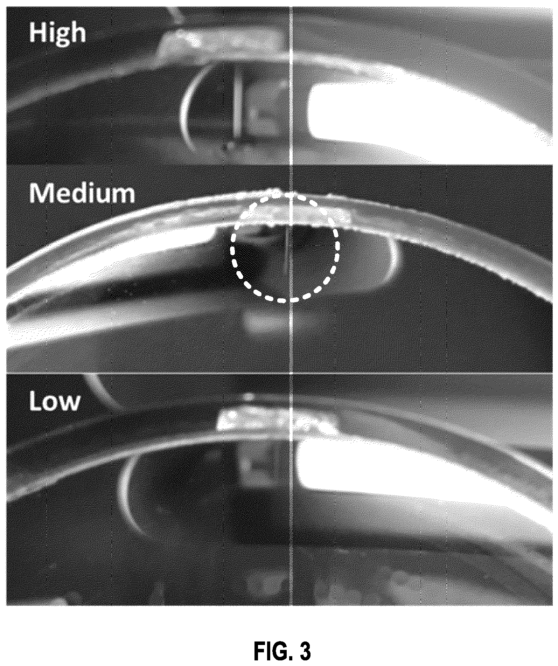

FIG. 3 shows optical images of weld line defect conditions, useful within the scope of the present disclosure. The weld line conditions were viewed in a controlled illumination setting and ranked according to (1) length, and (2) Low, Medium, or High intensity. The weld line defect near the edge of the lens is additionally indicated with the dotted circle in the "Medium" weld line example.

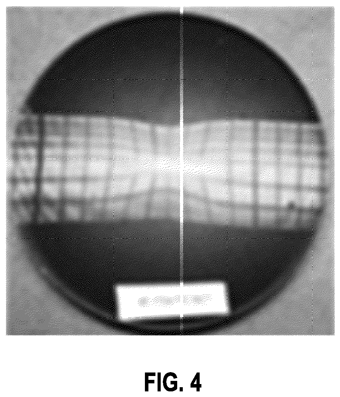

FIG. 4 shows an optical image of a center distortion, useful within the scope of the present disclosure. A minus lens with poor center distortion results from the thin center of the lens cooling faster and solidifying earlier than the rest of the lens, leading to the uneven shrinkage.

In brief, a mold cavity for injection molding of a lens is formed by two opposite faced inserts. For example, one concave mold insert and one convex mold insert can be used. To address the weld line issue, inserts made of crown glass or other materials having a thermal diffusivity α that satisfies 1 ≤ α/α_{g} < 11, where α_{g} is the thermal diffusivity of a borosilicate crown glass being equal to 6.20E-7 m²/s can be used in conjunction with an injection-compression process. This was described in Essilor U.S. Patent No. 6,576,162.

In a useful scope, an injection-compression molding process can be characterized by forming the mold cavity having an initial opening that is larger than a desired part thickness at the beginning of an injection cycle. This enlarged cavity thickness can reduce the flow resistance of the injected polymer melt and thus the pressure requirement of filling the cavity. Subsequently, the mold cavity opening would close down through movement of the mold inserts and/or mold plates to the final desired part thickness before the end of injection phase. The injection speed, initial opening of the cavity, closing speed, and closing pressure, however, can be carefully determined not only to control the movement of the flow front to avoid weld line defects, but also to achieve good optics.

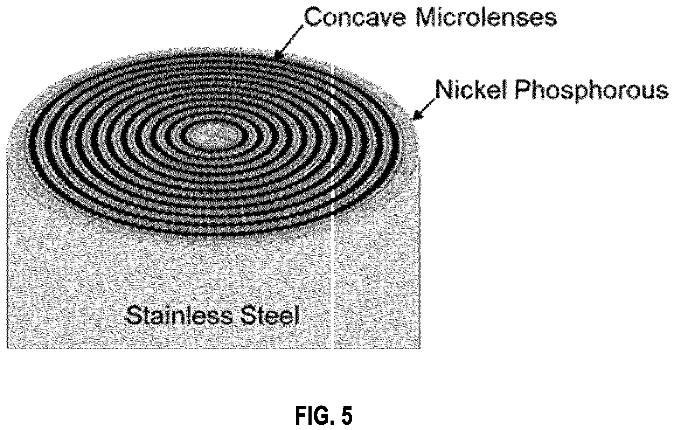

FIG. 5 shows a graphic illustration of a concave Nickel-Phosphorous (NiP) plated stainless steel (NiP-SS) insert with concave microlenses on the surface formed by a diamond turning process, useful within the scope of the present disclosure. Injection molding mold inserts with microlenses or other microstructures such as Fresnel structures (or, for example, diffusive microstructure such a bumps/recesses) can be made more precisely by diamond turning the microstructures onto a stainless steel insert plated with NiP. As noted previously, a metal insert, such as the NiP-SS mold insert, has a much higher thermal conductivity (or diffusivity) than a glass mold insert. Using NiP-SS inserts alone for injection molding of minus lenses may result in an increase of the weld-line and center distortion defects.

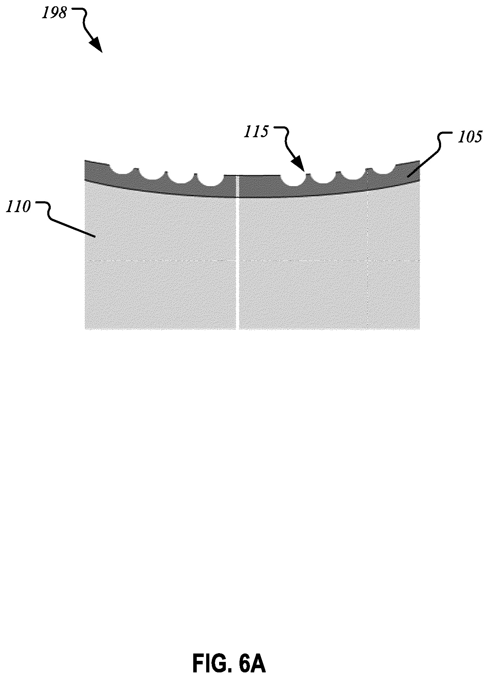

FIG. 6A shows a cross-sectional schematic of a first mold insert 198, useful within the scope of the present disclosure. In a useful scope, the first mold insert 198 includes a functional surface 105 and a bulk portion 110. The functional surface 105 can include a plurality of microstructures 115 formed thereon. The first mold insert 198 can be flat or have a base curvature based on a desired resulting lens curvature or optical power. The base curvature of the first mold insert 198 can additionally be concave or convex. For example, an optical power of the lens resulting from use of the first mold insert 198 can be between and inclusive of -8.00 to +6.00 Diopter. A thickness of the functional surface 105 can be, for example, between 1 and 2000 µm, or between 1 and 1500 µm, or between 5 and 1000 µm. A thickness of the bulk portion can be, for example, between 1 and 1000 mm, or 1 and 500 mm, or 5 and 100 mm.

According to the invention, the functional surface 105 is formed of a first material, and the bulk portion 110 is formed of a second material different from the first material. The first material of the functional surface 105 is a first metal alloy, and the second material of the bulk portion 110 is a second metal alloy. The first material and the second material have a thermal conductivity between 1 and 50 W/m-K, or preferably between 5 and 12 W/m-K. The first material and the second material have a modulus of between 100 and 1000 GPa. The first material and the second material can have thermal diffusivity of, for example, less than or equal to 3.1E-6.

In a useful scope, the second material of the bulk portion 110 is titanium alloy Ti-Al6-V4 in place of stainless steel, then plated with NiP as the first material of the functional surface 105, followed by diamond turning of the plurality of microstructures 115 to make inserts for injection molding of defect free minus lenses. Plating of the NiP first material before diamond turning can facilitate achieving more defect-free mold insert surfaces of optical finish and to improve the scratch resistance of the first mold insert 198 for better durability. In addition, the thermal conductivity of NiP is lower than most metals and alloys, thus plating of the NiP reduces the overall thermal diffusivity of the first mold insert 198 and enhances its ability to achieve defect-free lenses. It is preferred to have the NiP plating thickness >= 5 µm, more preferably >= 100 µm, and most preferably >= 300 µm not only to have enough thickness for re-fabrication of the plurality of microstructures 115 and the functional surface 105 if needed, but also to have extra thermal effects in preventing the formation of weld lines and center distortion defects. Other non-limiting examples of metals and metal alloys for the first material and the second material include stainless steel, nickel alloy hastelloy r-235, nickel alloy (hot rolled or forged), titanium, titanium alloy (Ti, Al6, V4), titanium alloy (Ti, Al8, Mo, V1), titanium alloy (Ti, Al4, V4, Cr10), and titanium alloy (Ti, Al2, Sn11, Zr5), among others.

The plurality of microstructures 115 can be used to mold, for example, refractive micro-structures or diffractive micro/nano-structures. The plurality of microstructures 115 can be an inversion of a desired final pattern be formed on the resulting lens after molding. The plurality of microstructures 115 can include microlenses or microlenslets or any other type of structure or elements having physical Z deformation/height or depth between 0.1 µm to 50 µm and width/length between 0.5 µm to 1.5 mm. These structures preferably have periodical or pseudo periodical layout, but may also have randomized positions. The preferred layout for microstructures is a grid with constant grid step, honeycomb layout, multiple concentric rings, contiguous e.g. no space in between microstructures. These structures may provide optical wave front modification in intensity, curvature, or light deviation, where the intensity of wave front is configured such that structures may be absorptive and may locally absorb wave front intensity with a range from 0% to 100%, where the curvature is configured such that the structure may locally modify wave front curvature with a range of +/- 20 Diopters, and light deviation is configured such that the structure may locally scatter light with angle ranging from +/- 1° to +/-30°. A distance between structures may range from 0 (contiguous) to 3 times the structure in "X" and/or "Y" size (separate microstructures).

In the sense of the disclosure, two optical elements located on a surface of a lens substrate are contiguous if there is a path supported by said surface that links the two optical elements and if along said path one does not reach the basis surface on which the optical elements are located. According to another scope, the optical elements are contiguous over a pupil when the optical lens over said pupil comprises no refraction area having a refractive power based on a prescription for said eye of the wearer or a refraction area having a refractive power based on a prescription for said eye of the wearer consisting in a plurality of respectively independent island-shaped areas. According to another scope, the two optical elements are contiguous if there is a path linking the two optical elements along part of said path one may not measure the refractive power based on a prescription for the eye of the person. According to another scope, optical elements being contiguous can also be defined in a surfacic or surface-oriented manner. A measured surface being between 3 mm² and 10 mm² is considered. The measured surface comprises a density of "W" optical elements per mm². If in said measured surface, at least 95% of the surface, preferably 98%, has an optical power different from the surface onto which the optical elements are located, said optical elements are considered to be contiguous.

Furthermore, microstructures which form a microstructured main surface of an ophthalmic lens substrate may include lenslets. Lenslets may form bumps and/or cavities (i.e., raised or recessed lenslet structures) at the main surface they are arranged onto. The outline of the lenslets may be round or polygonal, for example hexagonal. More particularly, lenslets may be microlenses. A microlens may be spherical, toric, cylindrical, prismatic, or aspherical shapes or any combination to make a multi-element shape. A microlens may have a single focus point, or cylindrical power, or multi-focal power, or non-focusing point. Microlenses can be used to prevent progression of myopia or hyperopia. In that case, the base lens substrate comprises a base lens providing an optical power for correcting myopia or hyperopia, and the microlenses may provide respectively an optical power greater than the optical power of the base lens if the wearer has myopia, or an optical power lower than the optical power of the base lens if the wearer has hyperopia. Lenslets may also be Fresnel structures, diffractive structures such as microlenses defining each a Fresnel structure, permanent technical bumps (raised structures), or phase-shifting elements. It can also be a refractive optical element such as microprisms and a light-diffusing optical element such as small protuberances or cavities, or any type of element generating roughness on the substrate. It can also be π-Fresnel lenslets as described in US2021109379, i.e. Fresnel lenslets which phase function has π phase jumps at the nominal wavelength, as opposition to unifocal Fresnel lenses which phase jumps are multiple values of 2π. Such lenslets include structures that have a discontinuous shape. In other words, the shape of such structures may be described by an altitude function, in terms of distance from the base level of the main surface of the optical lens the lenslet belongs to, which exhibits a discontinuity, or which derivative exhibits a discontinuity. In a useful scope, the microstructure can be a branding mark, holographic mark, metasurface, or the like.

Lenslets may have a contour shape being inscribable in a circle having a diameter greater than or equal to 0.5 micrometers (µm) and smaller than or equal to 1.5 millimeters (mm). Lenslets may have a height, measured in a direction perpendicular to the main surface they are arranged onto, that is greater than or equal to 0.1 µm and less than or equal to 50 µm. Lenslets may have periodical or pseudo periodical layout but may also have randomized positions. One layout for lenslets is a grid with constant grid step, honeycomb layout, multiple concentric rings, contiguous e.g. no space in between microstructures. These structures may provide optical wave front modification in intensity, curvature, or light deviation, where the intensity of wave front is configured such that structures may be absorptive and may locally absorb wave front intensity with a range from 0% to 100%, where the curvature is configured such that the structure may locally modify wave front curvature with a range of +/- 20, 500, or 1000 Diopters, and light deviation is configured such that the structure may locally scatter light with angle ranging from +/- 1° to +/- 30°. A distance between structures may range from 0 (contiguous) to 3 times the structure (separate microstructures).

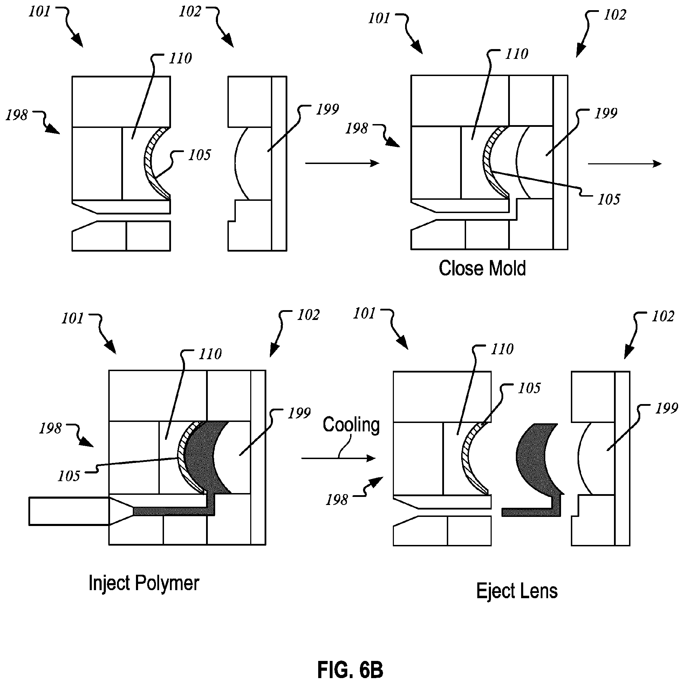

FIG. 6B shows an exemplary schematic of a straight injection molding process, useful within the scope of the present disclosure. In a useful scope, the mold device can include a first mold side 101 and a second mold side 102, the first mold insert 198 disposed on the first mold side 101, and a second mold insert 199 disposed on the second mold side 102. The first mold side 101 and the second mold side 102 can each include a hollow portion, wherein the first mold insert 198 and the second mold insert 199 can be removeably disposed therein. The first mold insert 198 can include the functional surface 105 and the bulk portion 110 as previously described, wherein the functional surface 105 is arranged, on the first mold side 101, closer to the second mold side 102 as compared to the bulk portion 110, which is disposed farther from the second mold side 102. The second mold insert 199 can have a smooth surface or similarly include another of the functional surface 105 having the plurality of microstructure 115. The arrangement of the second mold insert 199 can be based on desired optical properties of the resulting lens. The first mold side 101 with the first mold insert 198 and the second mold side 102 with the second mold insert 199 can be configured to move towards one another to form a cavity or away from one another to open the mold device.

The cavity can be connected to a hollow line formed by the coupling of the first and second mold sides 101, 102. The line can be configured to receive a polymer melt, for example, via a screw feeder or similar polymer injector device. The polymer injector can be attached to the mold device and configured to inject the polymer melt into the cavity when the first mold side 101 is coupled with the second mold side 102 to form a resulting lens from the polymer melt with surface features based on the plurality of microstructures 115 and a surface of the second mold insert 199 facing the cavity. For a semi-finished lens, a curvature along a convex side of the lens is fixed and the concave side of the lens can be modified after molding, for example via grinding and polishing. Note that multiple lines for receiving the polymer melt can be connected, such that an injection of the polymer from a source can fill multiple mold devices with a single injection and allow for parallel fabrication of multiple lenses.

As previously described, for a non-straight injection molding process, the first mold insert 198 and the second mold insert 199 can further adjust their displacement even after coupling and after the polymer melt is injected. For example, the first mold insert 198 and the second mold insert 199 can move closer together after the polymer melt is injected to compress the polymer melt before the polymer melt fully cools. The resulting lens can be removed upon uncoupling of the first mold side 101 and the second mold side 102.

### EXAMPLES

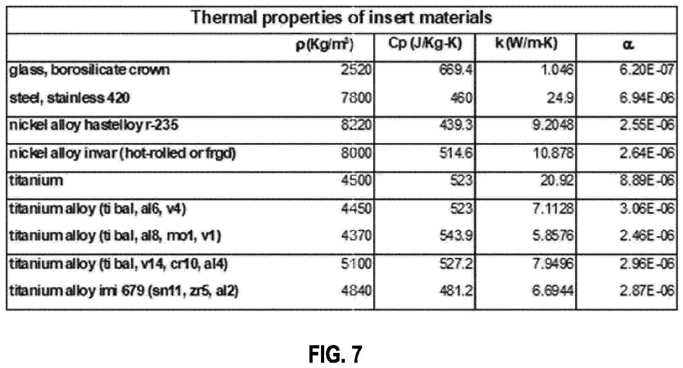

Example 1 - Injection molding experiments of producing minus lenses was conducted using NiP plated titanium alloy (Ti-Al6-V4) first mold inserts 198 on an injection-molding machine equipped with a 4-cavity injection-compression (I/C) mold using a Sabic Lexan polycarbonate resin. FIG. 7 shows a summary of metal alloys for making NiP plated first mold inserts 198 with the plurality of microstructure 115 formed therein.

The thickness of the NiP plating of the functional surface 105 on the first mold inserts 198 was approximately 300 µm. Tables I and II are the corresponding processing settings for - 6.00 and -4.00 Diopter lenses, respectively. The conditions were set in accordance with those typically used for glass mold inserts except the injection velocity and the cooling time. As titanium alloy inserts can withstand much higher injection pressure than glass inserts, PC melt can be injected into the mold cavities at a higher speed. Further, the required cooling time for titanium alloy inserts was significantly shorter due to their better thermal conductivity than glass.

**Table 1 - Processing conditions for injection molding -6.00/0.00 lenses**

| **Table I. Processing conditions for injection molding -6.00/0.00 lenses** | |
|---|---|
| Concave Insert | R261.18mm with microlenses on the surface |
| Convex Insert | R71.03mm with smooth surface |
| Melt Temperatures | 590°F |
| Mold Temperature | 280°F |
| Shot Size | 76.5 mm |
| Velocity | Vel 1= 5% |
| | Vel 2= 15% |
| | Vel 3= 10% |
| Injection Time | 30 sec. |
| Cool Time | 200 sec. |
| Clamp Compression Start | 17 mm on the injection stroke |
| Initial Insert Gap Before Compression | 8 mm |
| Clamp Closing Velocity | 20% |
| **Cycle Time** | **235 sec.** |

**Table 2 - Processing conditions for injection molding -4.00/0.00 lenses**

| **Table II. Processing conditions for injection molding -4.00/0.00 lenses** | |
|---|---|
| Concave Insert | R213.83mm with microlenses on the surface |
| Convex Insert | R86.82mm with smooth surface |
| Melt Temperatures | 590°F |
| Mold Temperature | 282 °F |
| Shot Size | 62.2 mm |
| Velocity | Vel 1= 5% |
| | Vel 2= 15% |
| | Vel 3= 10% |
| Injection Time | 30 sec. |
| Cool Time | 170 sec. |
| Clamp Compression Start | 20 mm on the injection stroke |
| Initial Insert Gap Before Compression | 7 mm |
| Clamp Closing Velocity | 20% |
| **Cycle Time** | **210 sec.** |

Based on the aforementioned processing conditions, the actual cycle time for molding - 6.00 Diopter lenses with the titanium alloy as the second material in the bulk portion 110 of the first mold inserts 198 was 235 seconds, which demonstrated a 17% reduction in time compared with 284 seconds for glass first mold inserts 198. Furthermore, the cycle time for molding -4.00 Diopter lenses was reduced by 21%, from 266 seconds for glass first mold inserts 198 to 210 seconds with the titanium alloy as the second material in the bulk portion 110 of the first mold inserts 198. All of the resulting lenses were coated with a hard coating and inspected; all lenses were observed to be free of weld line and center distortion defects, and the through-powers and µ-lens global average powers were within manufacturing specifications.

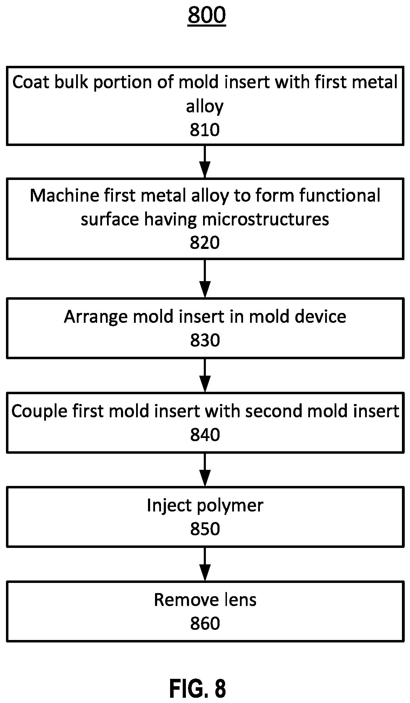

FIG. 8 is an exemplary flow chart for a method 800 of forming a lens, useful within the scope of the present disclosure. In step 810, the bulk portion 110 of the first mold insert 198 is coated with the first material, such as a metal or metal alloy. In step 820, the plurality of microstructures 115 are machined to form the functional surface 105 on the bulk portion 110. In step 830, the first mold insert 198 is arranged in the mold device, such as on the first mold side 101 while the second mold insert 199 is arranged on the second mold side 102 in the mold device opposite the first mold insert 198. In step 840, the first mold insert 198 and the second mold insert 199 are coupled to form the cavity. In step 850, the polymer melt is injected into the mold cavity. In step 860, the resulting lens can be removed after the first mold insert 198 is uncoupled from the second mold insert 199.

In the preceding description, specific details have been set forth, such as a particular geometry of a processing system and descriptions of various components and processes used therein. It should be understood, however, that techniques herein may be practiced in other embodiments that depart from these specific details, and that such details are for purposes of explanation and not limitation. Embodiments disclosed herein have been described with reference to the accompanying drawings. Similarly, for purposes of explanation, specific numbers, materials, and configurations have been set forth in order to provide a thorough understanding. Nevertheless, embodiments may be practiced without such specific details. Components having substantially the same functional constructions are denoted by like reference characters, and thus any redundant descriptions may be omitted.

Various techniques have been described as multiple discrete operations to assist in understanding the various embodiments. The order of description should not be construed as to imply that these operations are necessarily order dependent. Indeed, these operations need not be performed in the order of presentation. Operations described may be performed in a different order than specifically described unless expressly indicated otherwise. Various additional operations may be performed and/or described operations may be omitted.

Those skilled in the art will also understand that there can be many variations made to the operations of the techniques explained above while still achieving the same objectives of the disclosure. Such variations are intended to be covered by the scope of this disclosure. As such, the foregoing descriptions of embodiments are not intended to be limiting. The invention is defined by the following claims.

## Claims

1. A mold insert (198) for fabricating a microstructured lens, comprising:
a functional surface (105) and a bulk portion (110), wherein the functional surface (105) includes a plurality of microstructures (115) formed on said functional surface (105);
wherein
the functional surface (105) is formed of a first material and the bulk portion (110) is formed of a second material different from the first material;
the first material of the functional surface (105) is Nickel-Phosphorous (NiP), and the second material of the bulk portion (110) is a titanium alloy; and
the first material and the second material have a thermal conductivity between 1 and 50 W/m-K, and
a modulus of between 100 GPa and 1000 GPa.

2. The mold insert (198) of claim 1, wherein an optical power of a lens resulting from use of the mold insert (198) is between and inclusive of -8.00 to +6.00 Diopter.

3. The mold insert (198) of claim 1, wherein the functional surface is plated on the bulk portion.

4. The mold insert (198) of claim 1, wherein the thermal conductivity of the metal alloy is between 5 and 12 W/m-K.

5. The mold insert (198) of claim 1, wherein a thickness of the functional surface (105) is between 5 and 1000 µm.

6. The mold insert (198) of claim 1, wherein a thickness of the bulk portion (110) is between 5 and 100 mm.

7. A method of forming a mold insert (198) for fabricating a microstructured lens, comprising:
coating a bulk portion (110) of the mold insert (198) with a first metal alloy, a material of the bulk portion (110) being a second metal alloy; and
machining the first metal alloy to form a functional surface (105) including a plurality of microstructures (115) along a surface of the mold insert (198) and the first metal alloy,
wherein
the first and the second metal alloys have a thermal conductivity between 1 and 230 W/m-K,
the first and second metal alloys have a modulus of between 100 GPa and 1000 GPa; and
the first metal alloy is Nickel-Phosphorous (NiP), and the second metal alloy is a titanium alloy.

8. The method of claim 7, wherein an optical power of a lens resulting from use of the mold insert (198) is between and inclusive of -8.00 to +6.00 Diopter.

9. The method of claim 7, wherein the thermal conductivity of the first metal alloy is between 5 and 12 W/m-K and the thermal conductivity of the second metal alloy is between 5 and 12 W/m-K.

10. The method of claim 7, wherein a thickness of the functional surface (105) is between 5 and 1000 µm.

11. The method of claim 7, wherein a thickness of the bulk portion (110) is between 5 and 100 mm.

## Patentansprüche

1. Formeinsatz (198) zum Fertigen einer mikrostrukturierten Linse, der Folgendes umfasst:
eine funktionale Oberfläche (105) und einen Hauptvolumenanteil (110), wobei die funktionale Oberfläche (105) mehrere Mikrostrukturen (115) beinhaltet, die auf der funktionalen Oberfläche (105) gebildet sind;
wobei
die funktionale Oberfläche (105) aus einem ersten Material gebildet ist und der Hauptvolumenanteil (110) aus einem zweiten Material gebildet ist, das sich von dem ersten Material unterscheidet;
das erste Material der funktionalen Oberfläche (105) Nickel-Phosphor (NiP) ist und das zweite Material des Hauptvolumenanteils (110) eine Titanlegierung ist; und
das erste Material und das zweite Material eine Wärmeleitfähigkeit zwischen 1 und 50 W/m-K und
einen Modul zwischen 100 GPa und 1000 GPa aufweisen.

2. Formeinsatz (198) nach Anspruch 1, wobei eine optische Leistung einer Linse, die sich aus der Verwendung des Formeinsatzes (198) ergibt, zwischen und einschließlich -8,00 bis +6,00 Dioptrien beträgt.

3. Formeinsatz (198) nach Anspruch 1, wobei die funktionale Oberfläche auf dem Hauptvolumenanteil aufplattiert ist.

4. Formeinsatz (198) nach Anspruch 1, wobei die Wärmeleitfähigkeit der Metalllegierung zwischen 5 und 12 W/m-K liegt.

5. Formeinsatz (198) nach Anspruch 1, wobei eine Dicke der funktionalen Oberfläche (105) zwischen 5 und 1000 µm beträgt.

6. Formeinsatz (198) nach Anspruch 1, wobei eine Dicke des Hauptvolumenanteils (110) zwischen 5 und 100 mm beträgt.

7. Verfahren zum Bilden eines Formeinsatzes (198) zum Fertigen einer mikrostrukturierten Linse, umfassend:
Beschichten eines Hauptvolumenanteils (110) des Formeinsatzes (198) mit einer ersten Metalllegierung, wobei ein Material des Hauptvolumenanteils (110) eine zweite Metalllegierung ist; und
Bearbeiten der ersten Metalllegierung, um eine funktionale Oberfläche (105) zu bilden, die mehrere Mikrostrukturen (115) entlang einer Oberfläche des Formeinsatzes (198) und der ersten Metalllegierung beinhaltet,
wobei
die erste und die zweite Metalllegierung eine Wärmeleitfähigkeit zwischen 1 und 230 W/m-K aufweisen,
die erste und die zweite Metalllegierung einen Modul zwischen 100 GPa und 1000 GPa aufweisen; und
die erste Metalllegierung Nickel-Phosphor (NiP) ist und die zweite Metalllegierung eine Titanlegierung ist.

8. Verfahren nach Anspruch 7, wobei eine optische Leistung einer Linse, die sich aus der Verwendung des Formeinsatzes (198) ergibt, zwischen und einschließlich -8,00 bis +6,00 Dioptrien beträgt.

9. Verfahren nach Anspruch 7, wobei die Wärmeleitfähigkeit der ersten Metalllegierung zwischen 5 und 12 W/m-K liegt und die Wärmeleitfähigkeit der zweiten Metalllegierung zwischen 5 und 12 W/m-K liegt.

10. Verfahren nach Anspruch 7, wobei eine Dicke der funktionalen Oberfläche (105) zwischen 5 und 1000 µm beträgt.

11. Verfahren nach Anspruch 7, wobei eine Dicke des Hauptvolumenanteils (110) zwischen 5 und 100 mm beträgt.

## Revendications

1. Insert de moule (198) pour la fabrication d'un verre microstructuré, comprenant :
une surface fonctionnelle (105) et une partie massive (110), la surface fonctionnelle (105) comportant une pluralité de microstructures (115) formées sur ladite surface fonctionnelle (105) ;
où
la surface fonctionnelle (105) est formée d'un premier matériau et la partie massive (110) est formée d'un second matériau différent du premier matériau ;
le premier matériau de la surface fonctionnelle (105) est du nickel-phosphore (NiP), et le second matériau de la partie massive (110) est un alliage de titane ; et
le premier matériau et le second matériau ont une conductivité thermique comprise entre 1 et 50 W/m-K, et un module compris entre 100 GPa et 1000 GPa.

2. Insert de moule (198) selon la revendication 1, dans lequel la puissance optique d'un verre résultant de l'utilisation de l'insert de moule (198) est comprise entre -8,00 et +6,00 dioptries, valeurs incluses.

3. Insert de moule (198) selon la revendication 1, dans lequel la surface fonctionnelle est plaquée sur la partie massive.

4. Insert de moule (198) selon la revendication 1, dans lequel la conductivité thermique de l'alliage métallique est comprise entre 5 et 12 W/m-K.

5. Insert de moule (198) selon la revendication 1, dans lequel une épaisseur de la surface fonctionnelle (105) est comprise entre 5 et 1000 µm.

6. Insert de moule (198) selon la revendication 1, dans lequel une épaisseur de la partie massive (110) est comprise entre 5 et 100 mm.

7. Procédé de formation d'un insert de moule (198) pour la fabrication d'un verre microstructuré, comprenant
l'enduction d'une partie massive (110) de l'insert de moule (198) avec un premier alliage métallique, un matériau de la partie massive (110) étant un second alliage métallique ; et
l'usinage du premier alliage métallique pour former une surface fonctionnelle (105) comportant une pluralité de microstructures (115) le long d'une surface de l'insert de moule (198) et du premier alliage métallique,
où
les premier et second alliages métalliques ont une conductivité thermique comprise entre 1 et 230 W/m-K,
les premier et second alliages métalliques ont un module compris entre 100 GPa et 1000 GPa ; et
le premier alliage métallique est du nickel-phosphore (NiP), et le second alliage métallique est un alliage de titane.

8. Procédé selon la revendication 7, dans lequel une puissance optique d'un verre résultant de l'utilisation de l'insert de moule (198) est comprise entre -8,00 et +6,00 dioptries, valeurs incluses.

9. Procédé selon la revendication 7, dans lequel la conductivité thermique du premier alliage métallique est comprise entre 5 et 12 W/m-K et la conductivité thermique du second alliage métallique est comprise entre 5 et 12 W/m-K.

10. Procédé selon la revendication 7, dans lequel une épaisseur de la surface fonctionnelle (105) est comprise entre 5 et 1000 µm.

11. Procédé selon la revendication 7, dans lequel une épaisseur de la partie massive (110) est comprise entre 5 et 100 mm.
